# EUROPEAN PATENT APPLICATION

(11) **EP 3 232 186 A1**
(43) Date of publication of application: **18.10.2017**
(21) Application number: 16164742.5
(22) Date of filing: 11.04.2016
(51) Int. Cl.: G01N 25/72

(54) **METHOD AND SYSTEM FOR THERMOGRAPHIC ANALYSIS**

(71) Applicant: HS Marston Aerospace Limited, Wolverhampton WV10 6QJ (GB)
(72) Inventor: PHILLIPS, Paul, Bromsgrove, Worcestershire B61 8LY (GB)
(74) Representative: Taylor, Adam David

(57) **Abstract**

There is provided a method for thermographic analysis of a heat exchanger 100 having at least a primary and a secondary fluid path, the method comprising: heating and cooling of the heat exchanger in a heat exchanger cycle by passing fluid through the heat exchanger fluid paths; capturing a thermographic image of at least a portion of the heat exchanger; analysing the thermographic image; and determining a status of the heat exchanger based on the analysis of the image. There is also provided a system for thermographic analysis of a heat exchanger 100 having at least a primary and a secondary fluid path, the system comprising: a source of fluid 300; a connection for connecting the source of fluid to the heat exchanger 100 such that the fluid may flow through the heat exchanger; an imaging device for capturing a thermographic image of at least a portion of the heat exchanger 100; a data processor for analysing the thermographic image and for determining a status of the heat exchanger 100 based on the thermographic image.

## Description

The disclosure relates to a method and system for conducting thermographic analysis of a heat exchanger, particularly a heat exchanger formed by additive layer manufacturing.

Methods of thermography are used for thermographic testing or thermographic analysis of heat exchangers. Typically, thermography includes a stage of inducing a heat flow into a part that is to be inspected, then a step of measuring the infrared signature radiating from the surface of the heat exchanger. This measurement is carried out using a thermal imaging camera and a thermal image of the heat exchanger is generated. The thermal image is then used to help in assessing the working condition of the heat exchanger, and/or in locating any faults or defects in it. For example, if a heat exchanger is heated by flowing hot air through it and has a crack which is venting hot air to the environment, a thermal image of the heat exchanger may help in locating the crack because the hot air would be visible in the thermographic image.

Standard thermographic analysis can therefore indicate whether the status, operational, or safety requirements of a heat exchanger have or have not been met *i.e.* whether a fault is present in the heat exchanger or not. Little information may be provided on whether any damage has occurred within the heat exchanger, and more importantly on how the nature of such damage developed and changed throughout the life of the heat exchanger.

Typically, thermographic analysis of a heat exchanger is carried out manually by visual inspection of the thermographic image by an expert using judgement to determine whether a defect is present or not.

Viewed from a first aspect, the invention provides a method for thermographic analysis of a heat exchanger having at least a primary and a secondary fluid path, the method comprising: heating and cooling of the heat exchanger in a heat exchanger cycle by passing fluid through the heat exchanger fluid paths; capturing a thermographic image of at least a portion of the heat exchanger; analysing the thermographic image; and determining a status of the heat exchanger based on the analysis of the image.

Heat exchangers are subject to mechanical degradation over their operational life. In order to ensure that operational and/or safety requirements are met, the heat exchanger may undergo accelerated life testing. That is, the stage of heating and cooling of the heat exchanger may be a type of accelerated life testing which aims to reproduce the effects of operational life of the heat exchanger.

A test rig may be used for the purposes of accelerated life testing, and may include a source for a first fluid for passing through the primary flow path of the heat exchanger, and may include a source for a second fluid for passing through the secondary flow path of the heat exchanger. The test rig may be arranged to use air as the second fluid, which may hence be available without needing to be specially provided. In that case the source of the second fluid may be a device for providing air from the atmosphere to the heat exchanger. The test rig may include connections for connecting the sources of first and/or second fluids to the primary and secondary flow paths of the heat exchanger for flowing the first and second fluids therethrough. The test rig may also include a mount for mounting an image capturing device for monitoring the heat exchanger during testing.

Alternatively to analysis carried out during accelerated life testing, the stage of heating and cooling of the heat exchanger may be that which occurs during normal use of the heat exchanger. That is, capturing and analysing a thermographic image, and determining a status of the heat exchanger may be carried out with fluid flows occurring in service during the heat exchanger's normal operational life. A test rig as described above may also be used to simulate such fluid flows and hence to simulate the heat distribution during use of the heat exchanger. The status of the heat exchanger may therefore be assessed in service, either in situ or on a test rig, and any defects may be detected in time to e.g. allow replacement of the heat exchanger before total failure or a critical fault.

By repeatedly and cyclically heating and cooling the heat exchanger, either during accelerated life testing or with heat flows as in normal operation, the stresses of thermal expansion and contraction of the heat exchanger (or particular regions of the heat exchanger) may be induced and/or the effects of normal use of the heat exchanger can be simulated and observed.

The heat exchanger may be any suitable type of heat exchanger, particularly any type of fluid/fluid heat exchanger. For example, the heat exchanger may be a gas/gas heat exchanger, a gas/liquid heat exchanger, or a liquid/liquid heat exchanger. In some heat exchanger applications air may be used as the gas. The method may be used for cross flow heat exchangers. Moreover, the heat exchanger may be a heat exchanger that has been manufactured (*e.g*. from metal) using an additive layer manufacturing technique. Such heat exchangers may have increasingly complex interior topologies and geometries by virtue of the flexibility of the additive manufacturing technique. The disclosed method may allow the defects of such complex heat exchangers to be carefully monitored, modelled and predicted.

The heat exchanger may be installed on a testing rig, or installed in a heat exchanger system for normal use, which enables at least one heated and/or pressurized first fluid at a particular temperature, perhaps above or below the ambient temperature, to contact (*e.g*. flow through) the heat exchanger. The fluid may be air, water, oil, fuel, refrigerant, lubricant etc. If a temperature difference exists between the first fluid and the heat exchanger, it may result in heat being transferred to and/or from the heat exchanger, which may then result in a change in its temperature and in the infrared radiation radiating away from the heat exchanger's surfaces.

A second fluid (which may or may not be pressurised) may also flow through the heat exchanger and/or be cycled through it, for example in order to receive heat from the first fluid. The first fluid may be the same as the second fluid (albeit at a different temperature) or the first fluid may be different from the second fluid. The first and second fluids may flow through the heat exchanger simultaneously or during separate instances. The flowing of the second fluid may take place after a predetermined time, or once the heat exchanger reaches a predetermined temperature, or once a certain amount of the first fluid has been used for heating the heat exchanger. The next round of heating may then take place after a predetermined amount of time, or once the heat exchanger reaches a predetermined temperature, or once a certain amount of the second fluid has been used for cooling the heat exchanger. The heating and cooling processes may be repeated as required. The repeated heating and cooling of the heat exchanger may simulate the wear and degradation that the heat exchanger undergoes during its operational life and/or may test the heat exchanger under working conditions.

The heating and cooling of the heat exchanger may be a consequence of heat exchange as experienced during the heat exchangers use when in service. For example, both first and second fluids may flow through the heat exchanger simultaneously while it is operational, and the temperature distribution and infrared (IR) emissions of the heat exchanger may change as consequence. The heat exchanger operation may then be stopped, and the heat exchanger may return to an ambient temperature.

If the heat exchanger is being analysed during accelerated life testing, the first and second fluids may be cycled through the heat exchanger one after another a predetermined number of times, or for a predetermined duration to consecutively heat and cool the heat exchanger. The second fluid may flow through the same fluid path as the first fluid, once the flow of the first fluid has been stopped. Alternatively, the second fluid may flow through the second fluid path, either during the flow of the first fluid, or thereafter.

Since the purpose of heat exchangers is typically to transfer heat between two fluids, if the analysis is carried out during normal operation of the heat exchanger, then the first fluid may flow through the first fluid path, and the second fluid may flow through the second fluid path.

Therefore, for thermographic analysis during normal testing, the heating and cooling of the heat exchanger may be a consequence of its use, whereas during accelerated life testing, the heat exchanger may be purposefully heated and cooled with a quicker cycle time than during normal use. So long as there exists a temperature gradient within the heat exchanger *(i.e.* flow of heat) its resulting thermal spectrum may provide useful information relating to its status.

During the testing of the heat exchanger, capturing a thermographic image of the heat exchanger may include monitoring it using a suitable thermographic sensing device or thermal imaging device such as an infrared thermal imaging camera or the like. The monitoring and measuring of the thermal output of the heat exchanger may be continuous, or may be carried out at intervals. The thermal imaging camera may be installed in-situ with the heat exchanger being tested, and may be positioned facing towards the heat exchanger so as to capture an image of at least a portion of the heat exchanger. The camera may be positioned so as to observe a particular portion or region of the heat exchanger, or may be positioned so as to capture the entire heat exchanger within its field of view. The thermal imaging camera may be located at any suitable position facing the heat exchanger, for example it may be perpendicular to the fluid flow path. In the case of a camera monitoring and measuring the thermal output of a heat exchanger the camera may be positioned facing a gas stream e.g. the outlet for gas that has been cooled or warmed during flow through the heat exchanger.

As the heat exchanger is exposed to e.g. heat, the temperature variations within the heat exchanger will cause a change in the infrared radiation radiating away from the heat exchanger, for example differences in intensity and/or wavelength of the radiation. The thermal imaging camera may detect such radiation and provide a real-time thermographic image or thermogram of the heat exchanger which may be used to describe the heat exchanger's current state, and/or to predict the heat exchanger's future state.

The distribution of the infrared radiation from the heat exchanger depends upon its design. For example, differences in materials and structure may affect the thermal output of the heat exchanger, as might the operating conditions under which it is used. These factors may in turn affect the level of defects or degradation that the heat exchanger experiences. The change in temperature of the heat exchanger may be an increase or a decrease, or may be a change only in particular regions of the heat exchanger. The change in temperature may refer to a difference from an expected temperature.

As the heat exchanger is exposed to temperature gradients from the first and/or second fluids, either during accelerated testing or while in service, thermal stresses may give rise to fractures, cracks or other defects. For example, plates which separate two air streams in a heat exchanger may crack, leading to inter-stream leakages between flows. Such defects may affect the thermal image of the heat exchanger and change the thermographic image, producing hot or cold spots uncharacteristic of an undamaged heat exchanger and hence indicative of a flaw. In this manner, it is possible to obtain important operational information about the heat exchanger. Moreover, information relating to the development and evolution of defects with the heat exchanger may be obtained, such as when the defect first started to occur, at what rate it developed, how long it took to impact the operation of the heat exchanger etc. In this way, nascent defects may be observed and categorised.

The heat exchanger may be monitored by multiple thermal imaging devices or cameras, with images from the multiple devices being captured and analysed as described above. One camera may be positioned to observe regions of particular interest of the heat exchanger, and one may be positioned to observe the behaviour of the heat exchanger as whole in order to correlate observed changes. Multiple cameras may be positioned facing each major surface of the heat exchanger so as to obtain a complete view or complete thermal map. Cameras may be positioned stereoscopically and hence enable a three-dimensional model of the heat exchanger to be constructed.

Thermographic images may be collected with a particular frequency of capturing the images, and they may be collected automatically or manually. The thermographic camera may be suitable for recording video, as well as for capturing still images. Images may be captured at a predetermined rate. For example, the camera may record images at a frequency of about 60Hz or about 30Hz *(i.e.* video). The camera may record images at a frequency of about 1 Hz, about 0.1 Hz, or about 0.01 Hz, or any other frequency commensurate with the rate of evolution of the thermal signature of the heat exchanger.

Propagation of heat within and through a heat exchanger may directly affect the temporal behaviour of its surface temperature. Moreover, heat flow will be affected by the interior and exterior geometry and topology of the heat exchanger, as well as its constituent materials. Therefore, a thermographic image or map of the surface temperature may provide information relating to heat flow within the heat exchanger. This may be used for heat exchangers such as a heat exchanger in which the flow of heat is of primary importance.

Analysis of the thermographic image may include determination of any abnormal heat patterns, since hot or cold spots may arise as a result of areas of thermal stress, cracks, defects, delamination and/or contamination. The analysis may be carried out automatically and may comprise a pre-processing phase for image enhancement and/or noise removal of the thermograms. It may also include a segmentation phase in which regions of interest are identified and extracted.

The thermograms may be analysed using known statistical methods suitable for e.g. determining statistically significant deviations from an expected norm of the image, and may be used for determining whether abnormalities, defects or nascent defects are present in the thermogram. Statistical features may be identified from any regions of interest and may then be classified using an appropriate classification method or combination of methods. Analysed features may include hot regions of greater intensity than their surroundings (hot spots), or regions cooler than their surroundings (cold spots). Feature may include any discrepancy or anomaly for the expected heat distribution for the heat exchanger.

The fields of statistical analysis, pattern recognition, and image processing contain a number of established mathematical techniques that may be used for analysis of the captured images. For example, principle component analysis (PCA), neural networks, and/or fuzzy logic may be used. The output of the statistical analysis may be a classification of the feature, and may include an assessment regarding the level or degree of severity of the abnormality in an identified region of interest. It may also include a classification of the type of defect, and/or an estimate of how the defect will evolve. Any suitable combination of methods may be used for analysis of the thermographic image.

The data and images collected throughout a test of a heat exchanger may be gathered, stored and correlated, then associated with a particular defect that occurs in the heat exchanger as a result of the test. Such data may relate to specific heat exchangers, or may have general application to heat exchangers of a particular type. For example, a particular hot spot in a heat exchanger may be the consequence of a particular defect e.g. a crack in a particular place in the heat exchanger. By analysing the data and images that give rise to the defect, such defects may be anticipated based on early signs of the occurrence of such a hot spot. In this manner, early warning signs of defects may be discovered, and hence it is possible to determine that a particular heat exchanger will develop a given fault within an estimable timescale. Discovery of nascent defects is therefore possible, by comparison of observed images with reference images.

To this end, a library or database of defects may be developed and stored, and used as a reference for assessing heat exchangers during analysis. The database may include information about the location of a thermal feature with respect to the heat exchanger, the size of the feature, its shape, intensity, and rate of development over time. The database may further correlate and associate this information with a particular related defect or type of defect, as well as with the heat exchanger or type of heat exchanger to which it relates. Accelerated life testing and in-service testing of heat exchangers may continuously add data to the database, thereby expanding and building upon the library of known defects, and incrementally improving the accuracy of statistical models. This continuous improvement of the database is then increasingly useful for further testing and analysis of heat exchangers. With sufficient data, increasingly accurate assessments of a heat exchanger's status are possible.

A thermographic image, or a part of an image, of all of or a portion of a heat exchanger may therefore be compared against a library of images to assess whether or not any defects are present, and/or whether or not any nascent defects are present which may give rise to further issues. An estimate of the timescale for such issues to occur may also be determined. Comparisons may be made between different images as a whole, or between features (*e.g*. hot or cold spots) selected from images as needed. The comparison may be incorporated into the statistical analysis stage, such that similarities and/or correspondences may be determined using the statistical methods described earlier. A thermal feature which has similar characteristics to those of a defect in the library may indicate the occurrence of such a defect in the heat exchanger.

Therefore, a library may be compiled with sufficient historical data (*e.g*. during accelerated life testing) and inspection of a heat exchanger and classification of thermal anomalies may be automated. Further analysis data may be gathered during in-service testing, and may be used to refine, update and improve the library. The library may allow the automation and detection of defects in the early stage - nascent defects - that would otherwise not be possible, by associating early thermographic evidence of defects with the final resulting defect.

Some defects which might occur in a heat exchanger may be characterised not only by their thermal features at a single point in time, but by how those thermal features evolve over time. The method may therefore include capturing a second thermographic image of the heat exchanger at a later time, analysing the second thermographic image by any of the disclosed methods, and determining an updated status of the heat exchanger based on the analysis of the second thermographic image, as well as on the analysis of the analysis of the first image and the determined status of the heat exchanger. The updated status may be a confirmation of the first determined status, or may be the determination of a different status indicating e.g. a different defect. In this way, multiple thermal images may be captured and used to increase the accuracy and certainty of detection of a defect in the heat exchanger.

Active thermography offers different inspection methods as well as a variety of measurement techniques, so that the measurement procedure may be optimally adapted to different materials, parts, and/or heat exchangers with different structural properties.

Thermographic analysis may be used as part of a Non-Destructive Testing (NDT) process for heat exchangers, as it can provide information relating the rates of material degradation and can aid in identifying root causes of in-service failures. It can also be used to verify thermal models and simulations of heat exchanger wear and degradation. It can allow detailed information on the rate of degradation to be measured and stored for future reference *e.g.* in a library.

Viewed from a second aspect the invention provides a system for thermographic analysis of a heat exchanger having at least a primary and a secondary fluid path, the system comprising: a source of fluid; a connection for connecting the source of fluid to the heat exchanger such that the fluid may flow through the heat exchanger; an imaging device for capturing a thermographic image of at least a portion of the heat exchanger; a data processor for analysing the thermographic image and for determining a status of the heat exchanger based on the thermographic image.

The system may be arranged to perform thermographic analysis as discussed above in relation to the first aspect and the optional features thereof, for example including apparatus features as mentioned above having functions as described above.

The source of fluid may be a first source of a first fluid, and the system may further comprise a second source of a second fluid. The system may comprise a second connection for connecting the second source of the second fluid to the heat exchanger such that the second fluid may be flow through the heat exchanger.

The imaging device may include an output for outputting the thermographic image to the data processor. The output of the image may be automatic. The imaging device may be arranged to view the whole heat exchanger, or may be arranged to view a portion or preferred region of the heat exchanger. The system may comprise a plurality of imaging devices for capturing thermographic images of at least a portion of the heat exchanger. The imaging devices may be arranged to view the heat exchanger from opposing positions, or complementary positions. The imaging devices may be arranged stereoscopically so at to provide images that may be used to construct a three-dimensional image of the heat exchanger.

The data processor may be configured to perform any or all image analysis steps discussed above. Thus, during analysis of the received thermographic image the data processor may identify preferred regions of the image, or regions of interest. These regions may correspond to regions of the heat exchanger that are of particular interest, are prone to developing defects, and/or are critical to safe or efficient operation of the heat exchanger. These regions may be regions containing thermal anomalies. The data processor may be arranged to reduce noise in the image, to reduce the file size of the image, to enhance the image, and/or to filter the image with a predetermined image filter.

The data processor may segment the image into predetermined regions, or segment the image into dynamically determined regions. The data processor may be arranged to identify thermal anomalies or features, and to extract characteristics of those features from the image, and/or to use the extracted characteristics to inform the segmentation of the image.

The system may further comprise a database which stores a library of defects. The library may comprise information about the location of a thermal feature with respect to the heat exchanger, the size of the feature, its shape, intensity, and/or rate of development over time. The library may correlate and associate this information with a particular defect or type of defect, the historical data regarding the defect, its evolution over time, and/or the heat exchanger or type of heat exchanger to which it relates. The library may be configured to be updated (*e.g*. by the data processor controlling the database) so that the library is updated based on the information extracted from the thermographic images in combination with a defect which occurs in the heat exchanger.

The data processor may access and read the database and compare characteristics of thermal features of the images to information stored in the database, and may use that information to determine the status of the heat exchanger and the nature of any defects or nascent defects visible in the thermographic image.

The system may include a display for displaying the thermographic image, and/or for displaying the results of the analysis of the image and the determination of the status of the heat exchanger.

The data processor may be configured to control the system. The data processor may be configured to carry out any and all of the method steps described earlier.

Viewed from another aspect the invention provides a computer program product comprising instructions that, when executed on a system for thermographic analysis of a heat exchanger will cause the system to: capture a thermographic image of at least a portion of the heat exchanger; analyse the thermographic image; and determine a status of the heat exchanger based on the analysis of the image.

The program may cause the system to heat and cool the heat exchanger in a heat exchanger cycle by passing fluid through heat exchanger fluid paths. The program may cause the system to update a library of defects in a database based on thermographic information.

The program may cause the system or the data processor to carry out any and all of the processes described above in relation to the method of the first aspect and the optional features thereof. The system for thermographic analysis for which the computer program product is intended may be a system having features as described above in relation to the second aspect and optional features thereof.

Preferred embodiments of the invention are described below by way of example only and with reference to the accompanying drawings, in which.
FIG. 1 shows a schematic of a system for thermographic testing;
FIG. 2 shows a perspective view of an exemplary heat exchanger;
FIG. 3 shows another schematic of a system for thermographic testing;
FIG. 4 shows another schematic of a system for thermographic testing;
FIG. 5 shows an exemplary thermographic image; and
FIG. 6 shows a flowchart describing an exemplary thermographic analysis method.

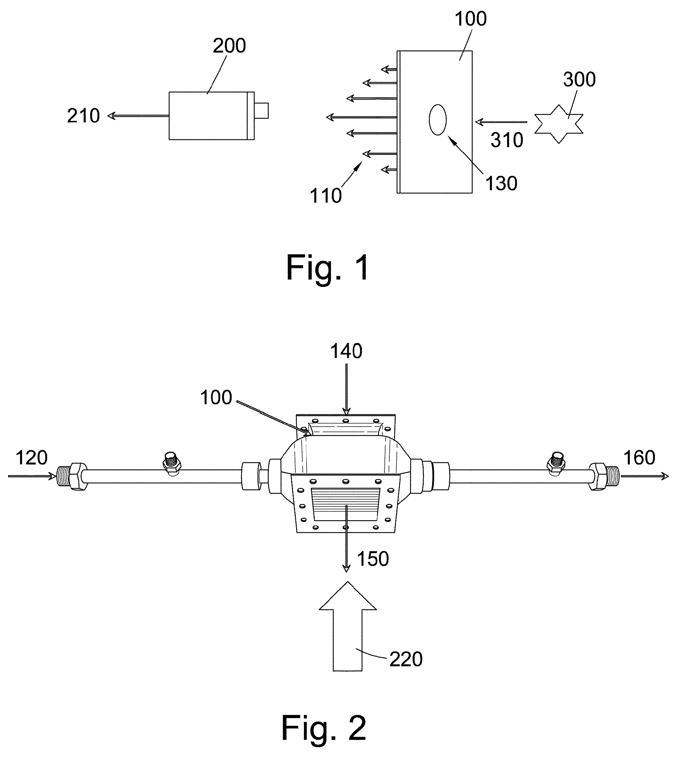

A system for conducting thermographic analysis of a heat exchanger 100 to be analysed is shown in FIG. 1. The system comprises a thermal imaging device 200, and a fluid source 300. The thermal imaging device 200 is an active infrared camera 200 configured to detect radiation in the infrared (IR) range *(i.e.* between 700 nanometres to 1 millimetre). The camera 200 is directed at the heat exchanger 100 and is positioned so that its field of view encompasses at least a portion of the heat exchanger 100.

The fluid source 300 and may be a source of heated, pressurised fluid that connects to the heat exchanger such that fluid flows through the heat exchanger 100. The fluid source 300 may provide multiple fluids at differing temperatures and/or with differing physical characteristics. The fluid source 300 is provided such that energy in the form of heat is transferred from (or to) the fluid source 300 to (or from) the heat exchanger 100 via flow of fluid(s) from the fluid source 300 through one or more of the heat exchanger fluid flow paths. The flow of fluid may be provided in cycles or for sustained continuous periods. The heat exchanger 100 is positioned so as to either receive energy from the fluid source 300 in the form of heat, or to donate energy to the fluid source 300 in the form of heat, via the fluid flow(s). The fluid source 300 may therefore be either a cooling mechanism provided such that it cools the heat exchanger 100, or a heating mechanism provided such that it heats the heat exchanger 100.

Regardless of whether the fluid source 300 has a heating or a cooling effect, the heat exchanger 100 emits energy in the form of infrared radiation 110. When the heat exchanger is not in operation, it emits IR radiation at the ambient temperature of its environment *i.e.* it is in thermal equilibrium with the environment. When the source 300 is providing fluid flowing through the heat exchanger 100, the thermal signature of the heat exchanger 100 will change from the thermal signature when the heat exchanger 100 is not in operation. FIG. 1 shows the case where the heat exchanger 100 has been heated by the source 300 and is emitting IR radiation 110. Only some of the infrared radiation 110 emitted from the heat exchanger 100 is shown, particularly that radiation 110 that propagates towards the camera 200. The camera 200 detects the IR radiation 110 and outputs via output 210 a thermographic image to a data processor, which forms part of a computer or computer network (not shown) that may further comprise a database for storing a library of defects.

The data processor is configured to receive the thermographic image from the camera 200 and analyse it according to desired methods. The analytical methods may be statistical and mathematical, as described before. The data processor may store the image for future reference, and/or may display it on a display.

When the heat exchanger 100 includes a defect 130 then this affects the distribution and spectrum of the emitted IR radiation 110, which hence differs compared to a healthy heat exchanger *i.e.* a heat exchanger without a defect. As may be seen in FIG. 1, the IR radiation 110 is not emitted at a uniform intensity across the surface of the heat exchanger, and instead has a higher intensity in the region near the defect 130. The defect 130 is therefore of a type that causes concentration of thermal energy in its proximity. Other defects may prevent thermal energy concentrating in their proximity by directing it elsewhere in the heat exchanger 100 - *e.g*. a crack directing heated fluid in an anomalous direction. This relationship between the defect and the thermal spectrum of the heat exchanger 100 surface may depend on multiple factors, such as for example the internal geometry of the heat exchanger 100, its constituent materials, and the particular temperature(s) and/or pressure(s) of the fluid(s) from the fluid source 300.

The camera 200 detects and measures the emitted IR radiation 110 and captures a thermographic image, which is then transferred via the output 210 to the data processor. The data processor is arranged to perform a number of image pre-processing steps. For example, the data processor reduces noise in the image or enhances contrast and/or intensity differences. The data processor then partitions the image into regions of interest using statistical methods, thereby highlighting any *e.g.* hot spots, cold spot, or other thermal anomalies. In the case of FIG. 1, the data processor identifies a statistically significant hot spot in the central region of the heat exchanger.

In the next stage, the data processor isolates the region of interest and the relevant features therein (*e.g*. hot spots, cold spots, anomalies *etc.).* The data processor has already been provided with information concerning the type of heat exchanger and hence already has information about what a correctly functioning (*i.e.* healthy) heat exchanger should look like. The data processor then performs an analysis upon the thermal features to determine relevant characteristics thereof. The characteristics include the location of the region in the image and with relation to the heat exchanger, the shape of the region, and the intensity of the thermal features. The data processor may be supplied with information about the heat exchanger being tested before it receives the raw thermographic image from the camera 200 so as to better assess the presence of anomalies. The data processor may instead check for thermal features within (or outside) predetermined parameters.

The data processor is configured to then compare the determined characteristics to the library of known characteristics stored in the database. This comparison includes the use of statistical methods as described above to compare the features to known characteristics. The data processor then judges the nature of the defect 130 based on the results of the comparison. For example, when the analysis of the image determines a hot spot located in the centre of the heat exchanger 100 of a given intensity and approximately circular distribution, the data processor compares these characteristics to the database and determines the type of the defect 130.

Having made this determination, the data processor may provide estimates of the evolution of the defect based on the data read from the database. The defect 130 may be of a type that is known to evolve into a critical fault *e.g*. within several more weeks of use. Alternatively, the defect can be of a sort that will not develop further, or will not significantly affect the operation of the heat exchanger.

FIG. 2 shows an example of a heat exchanger 100. The heat exchanger 100 is formed by an additive layer manufacturing technique. It receives heated fluid 120 and is arranged to exchange heat with a cool fluid 140 which enters the heat exchanger 100 from a perpendicular direction to the heated fluid 120. The cool fluid 140 exits the heat exchanger 100 in the direction 150, having absorbed heat from the heated fluid 120. The heated fluid 120 leaves the heat exchanger 100 in the direction 160 having transferred heat to the cool fluid 140. The arrow 220 indicates the view of a camera 200 positioned according to the present disclosure. The fluids 120, 140 might be supplied from a fluid source 300 as discussed above (not shown in FIG.2).

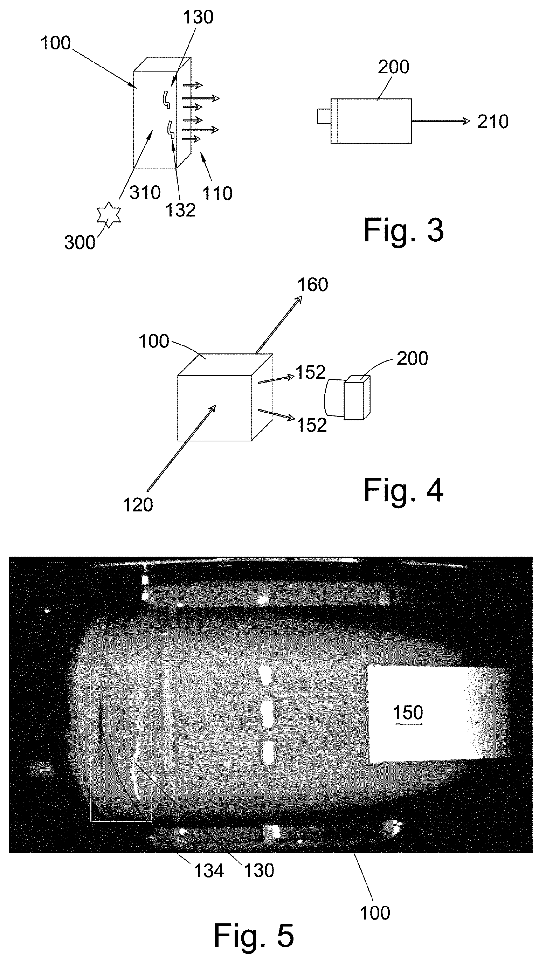

FIG. 3 shows a system for thermographic analysis of a heat exchanger. In the depicted case, the heat exchanger 100 includes multiple defects 130 and 132, which cause the emitted IR radiation 110 distribution to be different to that shown in FIG. 1. From the distribution of IR radiation 110 shown in FIG. 2, the camera 200 captures a raw thermographic image and transmits it to the data processor (not shown). The data processor analyses the image as described above and determines that two hot spots are present. Analysis of the hot spots and comparison with library data from the database indicates the nature of the defects 130 and 132.

FIG. 4 shows another schematic scenario in which a heat exchanger 100 receives only heated fluid 120 *(i.e.* does not receive a flow of cool fluid). The heat exchanger 100 has cracks that result in fluid leaks 152 flowing from the heat exchanger as the heat exchanger 100 is exposed to the fluid flow cycle. The camera 200 captures an image and transfers it to the data processor, which detects the leaks based on their thermal signatures via matching with data in the library.

FIG. 5 shows an exemplary thermographic image captured by the camera 200. The brighter regions are hotter than darker regions. A fluid flow 150 is evident at the right hand side of the image, and defects 130 and 134 are also evident in the left of the image. The defect 130 is a bright, hot feature, while the defect 134 is a darker, cooler feature. The fluid flow 150 is normal for the type of heat exchanger 100 shown in FIG. 2, and therefore when the data processor analyses the image, it does not consider this bright region to be anomalous. However, defects 130 and 134 are unexpected for the type of heat exchanger being tested, and the temperatures these defects exhibit lie outside expected ranges. The data processor therefore determines them to be relevant thermal features and analyses their characteristics using statistical methods.

When analysing, the data processor determines that the defects 130, 134 are in similar places in the image, and are of similar shape. For example, both defects 130, 134 are long and narrow, *i.e.* have major axes several times longer than their minor axes. However, defect 130 is a hot feature, whereas 134 is a cold feature. The data processor cross references the characteristics with known defects from the database and determines that they are both cracks.

Although both defects 130, 134 are similar in many ways, their difference in location in the image and hence on the heat exchanger allows the data processor to determine their nature based on their thermal signatures.

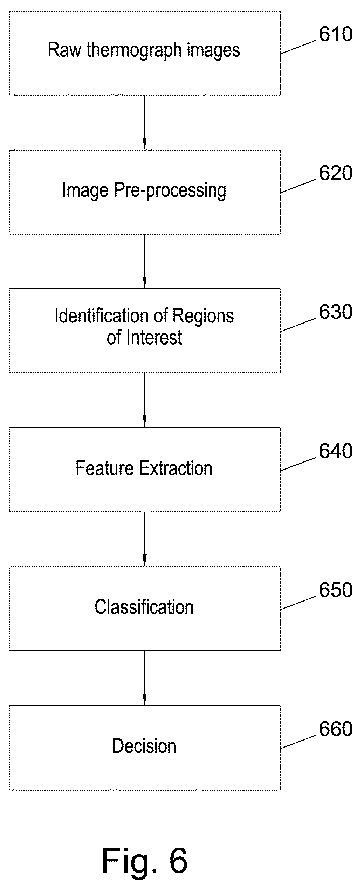

FIG. 6 shows a flowchart of the method of thermographic analysis. In step 610, a raw thermographic image of a heat exchanger is captured. The image then undergoes pre-processing in step 620 for example to remove noise and/or enhance the image characteristics. In step 630 the regions of interest of the image are determined, and in step 640 the thermal features of those regions are extracted from the image and analysed. In step 650 the features are classified, which may be done by comparing their characteristics to a database of known defect characteristics. In step 660, a decision regarding the thermal features is output.

By use of the above described method and system, NDT inspectors may be aided in identifying root cause analysis of in-service failures of heat exchangers. Automatic classification of thermal features removes human error based upon subjective decision making and allows for fully continual monitoring of the image data without the inconsistencies that would arise with continuous monitoring via a human operator. Thermographic analysis may be used to help validate and/or improve thermal prediction models and simulations. The method described above offers the potential for offline and online inspection of heat exchangers. Continuous monitoring during operational service can be achieved, as well as dedicated heat exchanger analysis as part of accelerated life testing. Data regarding defects gathered during accelerated life testing may be used to compile a library of defects, which may inform analysis of heat exchangers during in-service testing. Further, analysis of heat exchangers during in-service testing can be used to improve and update the library of defects, thereby constantly improving accuracy and usefulness of the system. Thermography analysis according to the present method allows the rate of degradation of a part to be accurately estimated. Further, little training is required for the technology and thermal images and classification results are intuitive.

Although the present disclosure has been described with reference to particular embodiments, the skilled reader will appreciate that modifications may be made that fall within the scope of the disclosure as defined by the appended claims.

## Claims

1. A method for thermographic analysis of a heat exchanger having at least a primary and a secondary fluid path, the method comprising:
heating and cooling of the heat exchanger in a heat exchanger cycle by passing fluid through the heat exchanger fluid paths;
capturing a thermographic image of at least a portion of the heat exchanger;
analysing the thermographic image; and
determining a status of the heat exchanger based on the analysis of the image.

2. The method as claimed in claim 1, wherein determining a status of the heat exchanger includes comparing at least one feature of the captured thermographic image with a library of defects to classify the at least one feature of the thermographic image based on that comparison.

3. The method as claimed in claim 2, further comprising updating the library based on the captured thermographic image.

4. The method as claimed in any preceding claim, wherein analysis of the thermographic image includes identification of a region of interest of the image, wherein the region of interest includes an anomalous thermal feature.

5. The method as claimed in any preceding claim, wherein analysis of the thermographic image includes determination of at least one characteristic of at least one anomalous thermal feature of the captured thermographic image.

6. The method as claimed in any preceding claim, wherein heating and cooling of the heat exchanger comprises accelerated life testing of the heat exchanger in a test rig configured for that purpose.

7. The method as claimed in any of claims 1 to 5, wherein heating and cooling of the heat exchanger comprises using a heating and cooling cycle that occurs during normal use of the heat exchanger for its intended purpose.

8. The method as claimed in any preceding claim, wherein the captured thermographic image is a first thermographic image, the method further comprising;
capturing a second thermographic image of at least a portion of the heat exchanger;
analysing the second thermographic image; and
determining an updated status of the heat exchanger based on the analysis of the second thermographic image and the determined status of the heat exchanger based on the analysis of the first image.

9. A system for thermographic analysis of a heat exchanger having at least a primary and a secondary fluid path, the system comprising:
a source of fluid;
a connection for connecting the source of fluid to the heat exchanger such that the fluid may flow through the heat exchanger;
an imaging device for capturing a thermographic image of at least a portion of the heat exchanger; and
a data processor for analysing the thermographic image and for determining a status of the heat exchanger based on the thermographic image.

10. The system as claimed in claim 8, comprising a database storing a library of defects for comparing against an anomalous thermal feature of a captured thermographic image for classification of that features.

11. The system as claimed in claim 9 or 10, configured to perform the method of thermographic analysis as claimed in any of claims 1 to 8.

12. A computer program product comprising instructions that, when executed on a system for thermographic analysis of a heat exchanger will cause the system to:
capture a thermographic image of at least a portion of the heat exchanger; analyse the thermographic image; and determine a status of the heat exchanger based on the analysis of the image.

13. The program product as claimed in claim 12 comprising instructions that, when executed on a system for thermographic analysis of a heat exchanger causes the system to carry out the method as claimed in any of claims 1 to 8.

14. A method for thermographic analysis of a heat exchanger substantially as described herein with reference to the drawings.

15. A system for thermographic analysis of a heat exchanger substantially as described herein with reference to the drawings.
